# EUROPÄISCHE PATENTSCHRIFT

(11) **EP 3 456 665 B1**
(45) Veröffentlichungstag und Bekanntmachung des Hinweises auf die Patenterteilung: **20.08.2025**
(21) Anmeldenummer: 18169869.7
(22) Anmeldetag: 27.04.2018
(51) Int. Cl.: B65G 53/46

(54) **ZELLENRADSCHLEUSE**
CELLULAR ROTARY FEEDER
VANNE À ROUE CELLULAIRE

(30) Priorität: 28.04.2017 DE 102017004104
(43) Veröffentlichungstag der Anmeldung: 20.03.2019
(73) Patentinhaber: OM Opitz+Matuschak GmbH, 46286 Dorsten (DE)
(72) Erfinder: Matuschak, Heinz-Dieter, 45966 Gladbeck (DE); Opitz, Günther, 45721 Haltern am See (DE)
(74) Vertreter: Grosse Schumacher Knauer von Hirschhausen

(56) Entgegenhaltungen:
- EP-A1- 0 568 950
- EP-A1- 0 899 223
- DE-A1- 2 213 648
- DE-A1- 4 113 738
- DE-C1- 3 742 522

## Beschreibung

### GEBIET DER ERFINDUNG

Die Erfindung betrifft eine Zellenradschleuse für Schüttgut gemäß den Merkmalen des Oberbegriffs von Anspruch 1. Eine solche Zellenradschleuse ist z.B. aus der Patentschrift DE 37 42 522 C1 bekannt. Als Schüttgut kann Spritzbeton vorgesehen sein oder ein pulvriges oder körniges Material oder ein zähflüssiges Material. Das Schüttgut gelangt über eine Zuführeinrichtung, etwa ein Silo oder ein Tank, oder über ein Fallrohr oder eine Leitung in die Zellenradschleuse hinein. Durch das Betreiben der Zellenradschleuse wird das Schüttgut gefördert, es verlässt die Zellenradschleuse auf der Austrittsseite. Die Zellenradschleuse umfasst einen Zellenradraum sowie ein im Zellenradraum angeordnetes Zellenrad. Das Zellenrad ist mit einer Antriebswelle drehfest verbunden. Das Zellenrad umfasst mehrere Stege oder Zellenwände, die die Zellen begrenzen. Beispielsweise kann das Zellenrad 14 Zellen bilden. Es können wahlweise mehr als 14 Zellen vorgesehen sein oder weniger als 14 Zellen.

Die Zelleradschleuse umfasst ferner zumindest einen Deckel, welcher den Zellenradraum begrenzt. Vorzugsweise können zwei Deckel vorgesehen sein, wobei der Zellenradraum zylindrische Form hat oder nahezu zylindrische Form. Die beiden Deckel bilden dann die Stirnseiten der (i. W. zylindrischen) Zellenradschleuse. Der Zellenradraum hat etwa dann nahezu zylindrische Form, wenn im Zellenradraum ein Konus mit kleinem (Öffnungs-)Winkel vorgesehen ist, um das Montieren/Demontieren von Zellenrad, Deckel und Zellenradraum zu erleichtern (Entformungskonus). Zwischen dem Deckel respektive zwischen den Deckeln und dem Zellenradraum oder zwischen Deckel(n) und Zellenrad sind Dichtmittel zum dichten Verbinden des Deckels (der Deckel) mit dem Zellenradraum.

### TECHNOLOGISCHER HINTERGRUND

Beim Fördern pulvriger oder zähflüssiger Materialien, insbesondere beim Fördern von Spritzbeton, haben sich Zellenradschleusen bewährt. Durch die dabei wirkenden Kräfte und (Dreh-)Momente werden einzelne Komponenten der Schleuse vergleichsweise stark (mechanisch) belastet. Dies liegt unter Anderem an dem Gewicht und an den Eigenschaften des Schüttguts, etwa an der Körnigkeit und an den Fließeigenschaften. Wenn zudem hohe Fördergeschwindigkeiten oder -raten erzielt werden sollen, werden die Schleusenkomponenten zum Teil stark beansprucht.

Es hat sich gezeigt, dass eine Zellenradschleuse effektiver betrieben werden kann, wenn die Zelle auf der Austrittsseite der Schleuse mit einem Förderdruck beaufschlagt wird, sodass in Folge der Wirkung des Förderdrucks die Zelle leer oder nahezu leer geblasen wird. Durch die sich dadurch ergebenden Druckgradienten innerhalb der Schleusenvorrichtung wird die Materialbeanspruchung der Schleusenkomponenten verstärkt, was die Standzeit respektive Betriebszeit der Schleuse beeinträchtigt.

### DARSTELLUNG DER ERFINDUNG

Vor diesem Hintergrund besteht die Aufgabe der vorliegenden Erfindung darin, die Standzeit respektive Wartungsintervalle einer eingangs beschriebenen Zellenradschleuse zu erhöhen, wobei insbesondere die Materialbeanspruchung der Zellenradschleusenkomponenten reduziert werden soll. Diese Aufgabe wird durch eine Zellenradschleuse nach Anspruch 1 gelöst. Vorzugsweise ist mit der Druckeinrichtung zumindest ein im oder am Zellenrad angeordneter, für das Schüttgut unzugänglicher Hohlraum mit einem Hohlraum-Überdruck beaufschlagbar ist. Die Druckeinrichtung erzeugt zumindest bereichsweise einen Gas(über)druck, der internen Kräften und Momenten, etwa verursacht durch den Förderdruck, in der Schleuse stabilisierend entgegenwirkt oder diese kompensiert. Eine Druckgradienten-Bildung im Inneren der Schleuse wird dadurch zumindest bereichsweise vermieden.

Der Hohlraum kann als zumindest eine am Zellenrad angeordnete Ausnehmung gebildet sein, aufgrund von Symmetrieüberlegungen gönnen mehrere Ausnehmungen vorgesehen sein. Beispielsweise kann an jeder Stirnseite des i. W. zylindrischen Zellenradraums eine Ausnehmung vorgesehen sein. Es können auch pro Stirnseite mehrere Ausnehmungen vorgesehen sein.

Idealerweise herrscht im Inneren der Zelleradschleuse ein Gasdruck, der im Wesentlichen dem Förderdruck entspricht, so dass nahezu alle Komponenten einem anstelle von mehreren unterschiedlichen Drücken ausgesetzt sind.

Sofern das Zellenrad eine als in Längsrichtung verlaufende Zentralöffnung gebildete Wellenaufnahme umfasst, in der die Antriebswelle drehfest angeordnet ist, kann vorgesehen sein, dass der Hohlraum an die Zentralöffnung und somit an die Welle zumindest abschnittsweise angrenzt. Alternativ oder kumulativ kann vorgesehen sein, dass der Deckel oder einer der Deckel den Hohlraum zumindest abschnittsweise begrenzt. Es kann auch vorgesehen sein, dass jeder von mehreren (zwei) Deckeln einen Teilbereich des Hohlraums begrenzt.

Bevorzugt kann der Hohlraum zumindest einen Ringraum bilden, der entlang zumindest eines Abschnitts der Antriebswelle vollumfänglich an die Antriebswelle angrenzt. Besonders bevorzugt sind zwei Ringräume vorgesehen, die an die Antriebswelle im Bereich der Deckel angrenzen und abschnittsweise von den Deckeln begrenzt werden. Indem der Ringraum respektive die Ringräume mit einem Hohlraum-Überdruck beaufschlagt werden, wird um einen Teilbereich respektive mehrere Teilbereiche der Antriebswelle ein umfänglich anliegender Hohlraum-Überdruck angelegt, wodurch eine aus dem Überdruck-Gas gebildete Druckmanschette an die Antriebswelle angelegt wird. Der insbesondere vollumfänglich an der Welle anliegende Überdruck wirkt einer druckbedingten Durchbiegung der Welle entgegen, wodurch der Verschleiß der Welle und der Verschleiß des auf der Welle angeordneten Zellenrads reduziert werden. Die Schleuse kann demnach länger ohne Wartungsunterbrechungen betrieben werden.

Insbesondere eine einseitige mechanische Beanspruchung der Antriebswelle, wie sie etwa durch unterschiedlich befüllte Zellen entsteht ("oben voll, unten leer") oder dadurch, dass in einer Zelle - etwa zum Ausblasen des Schüttguts - ein Überdruck vorherrscht (auf der Austrittsseite), wird durch den Hohlraum-Überdruck erheblich reduziert. Die geringere Beanspruchung (Durchbiegung) der Antriebswelle schont ferner das Zellenrad: Insbesondere diejenigen Teile der Zellenradwände, die die Zellen umfangsseitig begrenzen, und die (direkten) Kontakt mit dem Zellenradraum haben können, liegen durch die überdruckbedingte Reduktion der einseitigen Belastung der Antriebswelle gleichmäßiger an dem Umfang des Zelleradraums an, was den Verschleiß des Zellenrads reduziert. Auch das wirkt sich günstig auf die Standzeit der Schleusenvorrichtung aus.

Erfindungsgemäß ist außerdem eine Druckeinrichtung vorgesehen, mit der das Dichtmittel und/oder ein das Dichtmittel umfassender Dichtmittelraum mit einem Dichtmittel-Überdruck beaufschlagbar ist. Dichtmittel erzeugen regelmäßig einen Anpressdruck auf eine oder mehrere Dichtflächen, an denen das Dichtmittel anliegt. Der Anpressdruck kann durch rückstellende Kräfte eines verformten oder deformierten Dichtmittels gebildet werden (etwa infolge von Pressen oder Quetschen einer Dichtung mit nachgebendem Material wie Kunststoff oder Gummi), oder durch Federelemente, die auf das Dichtmittel einen Druck ausüben. Durch die erfindungsgemäße Druckeinrichtung wird dieser Anpressdruck um einen Beitrag des Dichtmittel-Überdrucks erhöht, was den Anpressdruck und somit die Dichtwirkung verstärkt. Die Wirkung des Dichtmittels wird dadurch verbessert, sodass eine Betriebsunterbrechung der Schleuse aufgrund von Undichtigkeiten oder aufgrund der Notwendigkeit eines Dichtungswechsels vermieden wird. Durch den Dichtmitteldruck wird die Materialbeanspruchung der Zellenradschleusenkomponenten letztlich reduziert. Erfindungsgemäß ist das Dichtmittel durch den Dichtmittel-Überdruck (stärker) an die dem Dichtmittel zugordnete Dichtmittel-Kontaktfläche anpressbar. Die Kontaktfläche ist diejenige Fläche, an dem das Dichtmittel anliegt. Die Kontaktfläche kann an einer oder mehreren Schleusenkomponenten angeordnet sein, die Kontaktfläche kann auch mehrere Flächenbereiche umfassen, wobei ein erster Flächenbereich an einer ersten Komponente und ein zweiter Flächenbereich an einer zweiten Komponente angeordnet sind. Das Dichtmittel kann eine Druckfläche umfassen, auf die durch den Dichtmittel-Überdruck eine Kraft ausübbar ist, die die Anpresskraft des Dichtmittels verstärkt. Das Dichtmittel ist in einer ringförmigen Dichtmittelnut angeordnet, wobei die Dichtmittelnut mit dem Dichtmittel-Überdruck beaufschlagbar ist. Die Dichtmittelnut ist in dem Deckel und an einer im Zellenradraum angeordneten, mit dem Zellenrad in dichtendem Kontakt stehenden und an den Deckel angrenzenden Hülse angeordnet.

Das Dichtmittel umfasst eine Hauptdichtung und zwei Zusatzdichtungen, wobei die erste Zusatzdichtung an der Hülse angeordnet ist, und die zweite Zusatzdichtung im Dichtmittelraum im Bereich des Deckels.

Es können - alternativ oder kumulativ - mechanische Anpressmittel zum Anpressen der Dichtung an die relevante Dichtungs-Kontaktfläche(n) vorgesehen sein. Die Anpressmittel stellen eine variable Anpresskraft bereit, die vom Anwender ggf. justierbar ist. Es kann auch ein selbstjustierendes Anpressmittel vorgesehen sein, welches stets eine bedarfsgerechte Anpresskraft bereitstellt.

Es kann eine Zellenradschleuse vorgesehen sein, die eine erste Druckeinrichtung zum Erzeugen des oben beschriebenen Hohlraum-Überdrucks umfasst sowie eine zweite Druckeinrichtung zum Erzeugen des ebenfalls oben beschriebenen Dichtungs-Überdrucks. Gemäß einer bevorzugten Ausgestaltung der Zellenradschleuse ist vorgesehen, dass durch eine Druckeinrichtung sowohl der Hohlraum-Überdruck als auch der Dichtmittel-Überdruck erzeugbar ist. Es kann ein Ventil oder Ventilblock vorgesehen sein, durch den die (Partial-)Drücke für den Dichtmittel-Überdruck und/oder für den Hohlraum-Überdruck zu- und/oder abschaltbar sind.

Ein besonderer Vorteil ergibt sich, wenn die Druckeinrichtung (auch oder in erster Linie) einen Förderdruck erzeugt, wobei eine Zelle der Zellenradschleuse mit dem Förderdruck beaufschlagbar ist, und wobei der Förderdruck das Herausfördern des Schüttguts aus der Zelleradschleuse bewirkt. Somit erzeugt die Druckeinrichtung zum einen den Förderdruck zum effektiven Entleeren der Austrittsseite der Schleuse und zum anderen den Hohlraum-Überdruck und/oder den Dichtmittel-Überdruck. Auch hier kann ein Ventil/Ventilblock vorgesehen sein, um den Gesamtdruck der Druckeinrichtung auf die (Partial-)Drücke Förderdruck, Hohlraum-Überdruck und Dichtmittel-Überdruck zu bilden. Es kann zumindest ein Druckminderer vorgesehen sein, etwa damit der Hohlraum-Überdruck und/oder der Dichtmittel-Überdruck höher ist als der Förderdruck innerhalb des Zellenradraums. Es kann zumindest ein Kanal, etwa in dem Gehäuse der Zellenradschleuse, vorgesehen sein, der an der Druckeinrichtung fluidisch angeschlossen ist, und mit dem der Hohlraum und/oder die Dichtmittelnut mit einem Überdruck beaufschlagbar ist. Es können auch mehrere Kanäle vorgesehen sein, wobei ein Kanal beispielsweise mit dem fluidisch verbunden ist und ein weiterer Kanal mit dem Dichtmittelraum.

Beispielsweise kann die Druckerzeugung (Druckeinrichtung), die den Förderdruck erzeugt, einen Bypass umfassen, welcher den Kanal der Druckeinrichtung mit Gasdruck (Luftdruck) beaufschlagt, so dass Hohlraum-Überdruck/Dichtmittel-Überdruck zur Verfügung stehen. Damit der Hohlraum-Überdruck und/oder der Dichtmittel-Überdruck zusammen oder jeweils höher sind als der Förderdruck, kann eine Leitung zum Förderdruck-Einlass oder der Förderdruck-Einlass einen Druckminderer umfassen.

Zur weiteren Verschleißreduktion kann eine im Zellenradraum angeordnete Hülse vorgesehen sein, die mit dem Zellenrad, insbesondere mit den Stegen des Rads, in dichtendem Kontakt steht. Die Hülse kann aus einem Kunststoff gebildet sein oder aus einem Metall oder aus einem keramischen Werkstoff. Zwischen Hülse und Steg kann ein Spalt vorgesehen sein, wobei das Spaltmaß kleiner als 0,3 mm ist, bevorzugt 0,1 mm.

Der Hohlraum-Überdruck und/oder der Dichtmittel-Überdruck und/oder der Förderdruck können steuerbar und/oder regelbar sein, insbesondere steuer- und regelbar. So kann durch geeignete Ventile und strömungsmechanische Bauteile und Komponenten ein Überdruck in einem Druckbereich von null bis zu einem von einer Druckerzeugung bereitgestellten Maximaldruck gewählt werden und auf den Hohlraum-Überdruck-Kanal und/oder den Dichtmittel-Überdruckkanal verteilt werden.

Zum Erhöhen der Standzeit respektive Betriebszeit kann ferner ein Druckerzeugungs-Verfahren vorgesehen sein, mit welchem ein Hohlraum-Überdruck und/oder ein Dichtmittel-Überdruck und/oder eine Förderdruck erzeugt werden. Die Summe aus Hohlraum-Überdruck und Förderdruck oder die Summe aus Dichtmittel-Überdruck und Förderdruck oder die Summe aus Hohlraum-Überdruck und Dichtmittel-Überdruck und Förderdruck ist höchstens so groß wie der von der Druckerzeugung erzeugte Maximaldruck. Durch Steuern/Regeln von einem oder mehreren, insbesondere dem Kanal oder den Kanälen zugeordneten, Ventilen kann jeder partialdruck (Hohlraum-Überdruck, Dichtmittel-Überdruck, Förderdruck) individuell eingestellt werden. Vorzugsweise werden die Partialdrücke Hohlraum-Überdruck und/oder Dichtmittel-Überdruck so eingestellt, dass sie höher sind als der Förderdruck-Partialdruck, wodurch der Förderdruck zumindest bereichsweise innerhalb der Schleuse kompensierbar wird, was die Materialbeanspruchung von Welle und Zellenrad reduziert. Der Förderdruck kann kleiner als 8 Bar sein, beispielsweise 6 bar oder zwischen 1 und 3 bar. Der Dichtmittel-Überdruck/Hohlraum-Überdruck kann oberhalb von 3 bar liegen, insbesondere oberhalb von 6 bar.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Zellenradschleuse dargestellt ist. Auch einzelne Merkmale der Ansprüche oder der Ausführungsformen können mit anderen Merkmalen anderer Ansprüche und Ausführungsformen kombiniert werden. Der Schutzumfang der Erfindung wird durch die Ansprüche definiert.

### KURZBESCHREIBUNG DER ZEICHNUNG

In der Zeichnung zeigen
- Fig. 1: eine perspektivische Ansicht einer Zellenradschleuse,
- Fig. 2A, B: seitliche Ansicht und Ansicht von unten der Zellenradschleuse gemäß Fig. 1,
- Fig. 3A,B: schematischer Schnittansichten von verschiedenen Ausgestaltungen einer Zellenradschleuse und
- Fig. 4: eine Ausgestaltung einer Dichtanordnung einer Zellenradschleuse.

### DETAILLIERTE BESCHREIBUNG VON AUSFÜHRUNGSBEISPIELEN

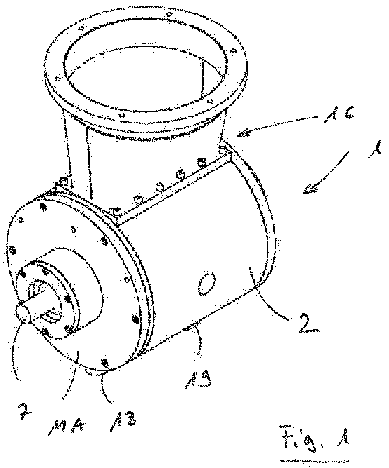

Eine perspektivische Ansicht einer Zellenradschleuse 1 kann der Fig. 1 entnommen werden. Oberseitig ist an dem Gehäuse 2 der Zellenraschleuse 1 die Eintrittsseite 16 zu erkennen, an der eine trichterförmige Zuführung für das Schüttgut mit mehreren Schrauben befestigt ist.

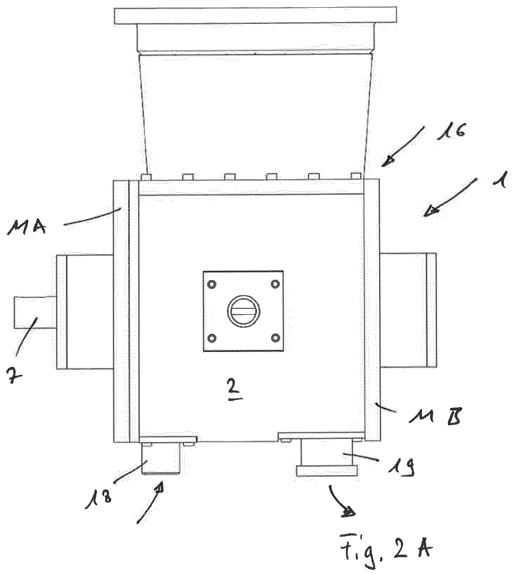

Eine seitliche Ansicht der Zellenradschleuse 1 gemäß Fig. 1 kann der Fig. 2A entnommen werden. Entlang der Symmetrieachse des im Wesentlichen zyliderartigen Gehäuses 2 wird die Antriebswelle 7 der Zellenradschleuse 1 geführt. Zu den Seiten hin umfasst das Gehäuse 2 jeweils einen als Deckel 11A, 11B gebildeten Gehäuseabschluss. Im Bereich der (zylidrischen) Gehäusewand ist seitlich ein Anschluss für einen Bypass der Druckeinrichtung vorgesehen und im Bereich der Unterseite, im Bereich der Austrittsseite 17, welche gegenüber der Eintrittsseite 16 angordnet ist, ist eine Anschlussmöglichkeit (Einlass 18) für den Förderdruck vorgesehen. Benachbart dazu ist der Auslass 19.

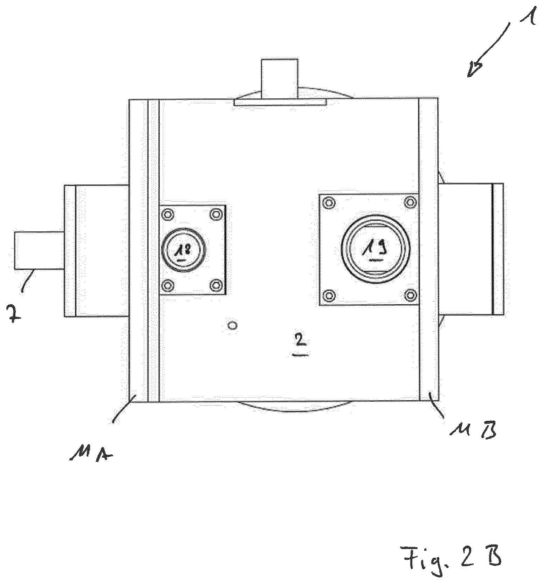

Die Fig. 2B zeigt eine Ansicht der Zellenradschleuse von unten, wobei Einlass 18 und Auslass 19 erkennbar sind. Der Einlass 18 hat einen geringeren Durchmesser als der Auslass 19, wodurch das Gas der an dem Einlass 18 anschließbaren Druckeinrichtung (20) in der Zelle 9 expandiert. Durch den größeren Auslass 19 wird zudem das Entleeren der Zelle 9 begünstigt.

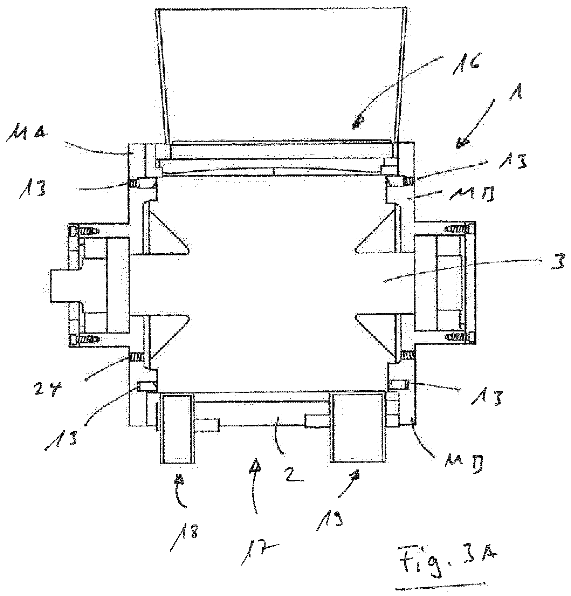

Fig. 3A zeigt eine schematische Schnittansicht einer Variante einer Zellenradschleuse 1, ähnlich zu der Zellenradschleuse 1 gemäß der Figuren 1 bis 2B. Zwischen Deckel 11A und 11B ist eine Hülse 28 vorgesehen, an die - zumindest abschnittsweise - ein Dichtmittel 13 angrenzt. Das Dichtmittel 13 ist in einem Dichtmittelraum angeordnet und es sind Anpressmittel vorgesehen, welche das Dichtmittel an die Hülse und an das Zellenrad anpressen.

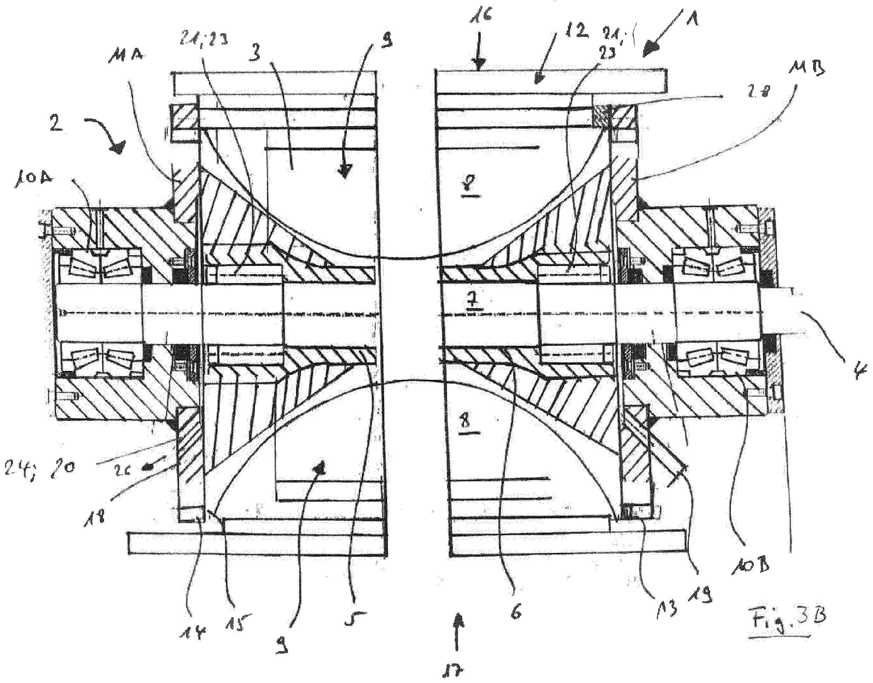

Fig. 3B zeigt schematisch eine Variante einer Zellenradschleuse 1 in schematischer Schnittansicht. Die Zelleradschleuse 1 umfasst ein Gehäuse 2, in dem ein Zellenrad 3 angeordnet ist. Das Gehäuse 2 ist im Wesentlichen zylinderförmig. Entlang der Symmetrieachse 4 des nahezu zylinderförmigen Gehäuses 2 und durch die Zentralöffnung 5 des Zellenrads 3 hindurch verläuft die Antriebswelle 7, an der das Zellenrad 3 mittels einer Wellenaufnahme 6 drehfest angeordnet ist. Das Zellenrad 3 umfasst mehrere Zellenradwände 8, welche die Zellen 9 der Zellenradschleuse 1 begrenzen. Das Zellenrad 3 steht mit der Hülse 28 in Kontakt.

Die Antriebswelle 7 wird endseitig in Wellenlägern 10A, 10B gelagert. Im Bereich der Läger 10A, 10B ist jeweils ein Deckel 11A, 11B angeordnet, der den Zellenradraum 12 stirnseitig begrenzt. Zwischen dem Zellenrad 3 und dem Deckel 11A, 11B ist jeweils ein Dichtmittel 13 vorgesehen, mit dem der Deckel 11A, 11B abgedichtet wird. Das Dichtmittel 13 ist in einem nutförmigen Dichtmittelraum 14 angeordnet. Die ringförmige Dichtmittelnut 14 umfasst eine erste Kontaktfläche 15 für das Dichtmittel 13. Eine zweite Kontaktfläche 15 für das Dichtmittel 13 ist auf der Innenseite des Deckels 11A, 11B angeordnet.

Das in der Fig. 3B nicht dargestellte Schüttgut gelangt von oben, beispielsweise aus einem siloartigen Behälter, an dem die Zellenradschleuse 1 angeschlossen ist, in die Zelle 9 auf der Eintrittsseite 16 der Schleuse 1. Unten befindet sich die Austrittsseite 17 der Schleuse 1. An der Austrittsseite 17 befindet sich ein Einlass 18 für ein Fördergas (Luft), welches unter einem Förderdruck in die (untere) Zelle 9 der Zellenradschleuse 1 eingeblasen wird, und welches die (untere) Zelle 9 im Bereich gegenüber dem Einlass 18 durch einen Auslass 19 wieder verlässt. Durch den Auslass 19 wird das Schüttgut aus der (unteren) Zelle 9 der Schleuse 1 herausgeblasen.

Durch den Förderdruck in der unteren Zelle 9 entsteht ein Druckgefälle innerhalb der Schleuse 1: In der oberen Zelle 9 (Eintrittsseite 16) ist kein Überdruck, in der unteren Zelle 9 (Austrittsseite 17) ist ein durch den Förderdruck verursachter schleuseninterner Überdruck gegenüber dem Druck auf der Eintrittsseite 16. Dieser Druckunterschied verursacht eine mechanische Beanspruchung der Antriebswelle 7, die Antriebswelle 7 erfährt ein Biegemoment. Das Biegemoment der Antriebswelle 7 kann zum Verschleiß der Wellenläger 10A, 10B führen und zum Verschleiß der Welle 7, bis hin zum Wellenbruch.

Zur Reduktion des Biegemomentes der Antriebswelle 7 wird in der Schleuse 1 mittel einer Druckeinrichtung 20 ein statischer Gegendruck erzeugt, wodurch es in der Schleuse 1 - zumindest bereichsweise - zum Druckausgleich kommt. Der statische Gegendruck wirkt in dem Hohlraum 21, welcher an zwei Teilbereiche 22 der Antriebswelle 7 angrenzt, die wiederum jeweils an den Deckel 11A, 11B angrenzen. Der Hohlraum 21 ist im Wesentlichen als linke und rechte zylindrische Ausnehmungen in dem Zellenrad-Körper gebildet und bildet im eingebauten Zustand zwei Ringräume 23, die durch die Welle 7 und durch den Deckel 11A, 11B, jeweils abschnittsweise, begrenzt werden. Der in Fig. 3B dargestellte Hohlraum 21 kann auch als eine Bohrung oder mehrere Bohrungen in dem Zellenrad 3 gebildet sein (nicht dargestellt in Fig. 3B).

Der statische Überdruck in dem Hohlraum 21 wird durch eine mit der Druckeinrichtung 20 verbundene Druckerzeugung 26 aufgebaut, die fluidisch mit dem Kanal 24 verbunden ist, der wiederum mit dem Hohlraum 21 verbunden ist. Die Druckeinrichtung 20 umfasst einen Kanal 24, der gemäß Fig. 3B aus zwei Teilkanälen 25 besteht, die jeweils an der Druckerzeugung fluidisch angeschlossen sind. Die Druckerzeugung 26 kann eine Pumpe oder ein Kompressor sein oder diese(n) umfassen (nicht dargestellt in Fig. 3B). Die Druckeinrichtung 20 kann Druckminderer und/oder Ventile und/oder Absperrvorrichtungen umfassen. Die Druckerzeugung 26 erzeugt einen Gesamtdruck für die Schleusenvorrichtung 1. Der von der Druckerzeugung 26 bereitgestellte Gesamtdruck kann einstellbar, steuerbar und/oder regelbar sein. Hohlraum-Überdruck und Förderdruck bilden den Gesamtdruck oder einen Partialdruck, der kleiner als der Gesamtdruck ist. Bevorzugt ist der Hohlraum-Überdruck größer als der Förderdruck.

Fig. 3B zeigt ferner, dass der Dichtmittelraum 14 mit einem Kanal 27 fluidisch verbunden ist, wobei der Kanal an der Druckerzeugung 26 fluidisch angeschlossen ist. Mit einer Druckeinrichtung 20, die den Kanal 27 umfasst, kann in dem Dichtmitteraum 14 ein Dichtmittel-Überdruck erzeugt werden, wodurch das Dichtmittel 13 fester an die Kontaktfläche 15 angepresst wird. Der Anpressdruck des Dichtmittels 13 gegen die Kontaktfläche 15 wird durch den Dichtmittel-Überdruck in dem Dichtmittelraum 14 erhöht. Für den Dichtmittelüberdruck kann eine separate Druckeinrichtung vorgesehen sein. Es ist zweckmäßig wenn sowohl der Dichtmittel-Überdruck als auch der Hohlraum-Überdruck von einer gemeinsamen Druckeinrichtung 20 erzeugt werden. Die Druckerzeugung 26 ist mit der Druckeinrichtung 20 oder mit den Druckeinrichtungen verbunden oder umfasst diese.

Nicht dargestellt in Fig. 3B sind Steuer- und/oder Regelmittel, mit denen die (Partial-)Drücke Hohlraum-Überdruck, Dichtmittel-Überdruck und Förderdruck steuerbar respektive regelbar sind. Die Steuer-/Regelmittel können Ventile und Druckminderer umfassen, sowie eine Logik, mit der der von der Druckerzeugung 26 bereitgestellte Gesamtdruck einstellbar ist, sowie die jeweiligen Partialdrücke in der Zellenradschleuse 1. Es können Bedienelemente vorgesehen sein, mit denen die Steuerung/Regelung bedienbar ist. Beispielsweise kann vorgesehen sein, dass mit den Bedienelementen ein absoluter (Hohlraum-Über-, Dichtmittel-Über- und/oder Förder-)Druck eingestellt wird. Es kann auch vorgesehen sein, dass eine relative Druckeinstellung gewählt wird (das Anteil "Hohlraum-Überdruck", der Anteil "Dichtmittel-Überdruck" und der Anteil "Förderdruck" bilden zusammen 100% des, vorzugsweise absolut einstellbaren, Gesamtdrucks).

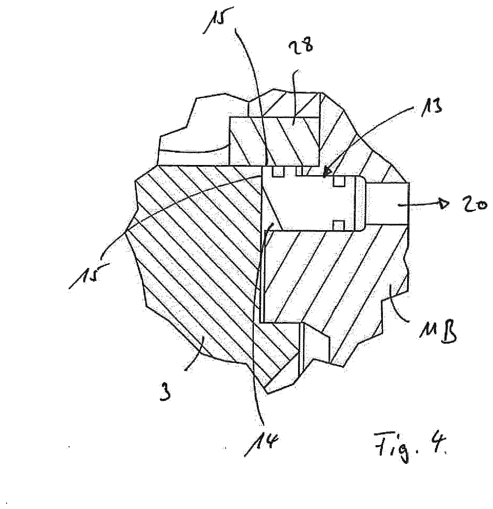

Eine Ausgestaltung des Dichtmittels kann der Figur 4 entnommen werden. Gemäß Fig. 4 ist ein Anschluss für einen Bypass der Druckeinrichtung (20) vorgesehen, so dass das Dichtmittel 13 durch einen, ggf. einstellbaren und/oder regelbaren, Gasdruck an die Dichtmittel-Kontaktflächen 15 angepresst wird. Das Dichtmittel umfasst eine Hauptdichtung mit einer Schrägfläche und zwei etwa O-Ring-artige Zusatzdichtungen. Die Kontaktfläche befindet sich an der Hülse 28 und am Zellenrad 3. Die erste Zusatzdichtung ist an der Hülse 28 angeordnet, die zweite Zusatzdichtung im Dichtmittelraum im Bereich des Deckels 11B.

### BEZUGSZEICHENLISTE

- 1: Zellenradschleuse
- 2: Gehäuse
- 3: Zellenrad
- 4: Symmetrieachse
- 5: Zentralöffnung
- 6: Wellenaufnahme
- 7: Antriebswelle
- 8: Zellenradwand
- 9: Zelle
- 10A, 10B: Wellenlager
- 11A, 11B: Deckel
- 12: Zellenradraum
- 13: Dichtmittel
- 14: Dichtmittelraum, Nut
- 15: Kontaktfläche
- 16: Eintrittsseite
- 17: Austrittsseite
- 18: Einlass
- 19: Auslass
- 20: Druckeinrichtung
- 21: Hohlraum
- 22: Teilbereich
- 23: Ringraum
- 24: Kanal
- 25: Teilkanal
- 26: Druckerzeugung
- 27: Kanal
- 28: Hülse

## Patentansprüche

1. Zellenradschleuse (1) für Schüttgut, insbesondere für Spritzbeton, mit
einem Zellenradraum (12),
einem im Zellenradraum (12) angeordneten Zellenrad (3), das mit einer Antriebswelle (7) drehfest verbunden ist, und
zumindest einem Deckel (11A, 11B), welcher den Zellenradraum (12) begrenzt, wobei zwischen Deckel (11A, 11B) und Zellenrad (3) angeordnete Dichtmittel (13) zum dichten Verbinden des Deckels (11A, 11B) mit dem Zellenradraum (3) vorgesehen sind,
wobei eine Druckeinrichtung (20) vorgesehen ist, mit der das Dichtmittel (13) und/oder ein das Dichtmittel (13) umfassender Dichtmittelraum (14) mit einem Dichtmittel-Überdruck beaufschlagbar ist, wobei das Dichtmittel (13) durch den Dichtmittel-Überdruck stärker an zumindest eine dem Dichtmittel (13) zugordnete Dichtmittel-Kontaktfläche (15) anpressbar ist, wobei das Dichtmittel (13) in einer ringförmigen Dichtmittelnut (14) angeordnet ist, und wobei die Dichtmittelnut (14) mit dem Dichtmittel-Überdruck beaufschlagbar ist,
**dadurch gekennzeichnet, dass** die Dichtmittelnut (14) in dem Deckel (11A, 11B) und an einer im Zellenradraum (12) angeordneten, mit dem Zellenrad (3) in dichtendem Kontakt stehenden und an den Deckel (11A, 11B) angrenzenden Hülse (28) angeordnet ist,
wobei sich die Dichtmittel-Kontaktfläche (15) an der Hülse (28) und am Zellenrad (3) befindet, und
wobei das Dichtmittel (13) eine Hauptdichtung umfasst und zwei Zusatzdichtungen, wobei die erste Zusatzdichtung an der Hülse (28) angeordnet ist, und die zweite Zusatzdichtung im Dichtmittelraum (14) im Bereich des Deckels (11B).

2. Zellenradschleuse (1) nach Anspruch 1, **dadurch gekennzeichnet, dass** das Dichtmittel (13) eine Druckfläche umfasst, auf die durch den Dichtmittel-Überdruck eine Kraft ausübbar ist, die eine Anpresskraft des Dichtmittels (13) verstärkt.

3. Zellenradschleuse (1) nach Anspruch 1 oder 2, **dadurch gekennzeichnet, dass** mit der Druckeinrichtung (20) oder mit einer zweiten Druckeinrichtung zumindest ein im oder am Zellenrad (3) angeordneter, für das Schüttgut unzugänglicher Hohlraum (21) mit einem Hohlraum-Überdruck beaufschlagbar ist.

4. Zellenradschleuse (1) nach Anspruch 3, **dadurch gekennzeichnet, dass** der Hohlraum (21) als zumindest eine am Zellenrad (3) angeordnete Ausnehmung gebildet ist.

5. Zellenradschleuse (1) nach Anspruch 3 oder 4, wobei das Zellenrad (3) eine als in Längsrichtung verlaufende Zentralöffnung (5) gebildete Wellenaufnahme (6) umfasst, in der die Antriebswelle (7) angeordnet ist, **dadurch gekennzeichnet, dass** der Hohlraum (21) an die Zentralöffnung (5) zumindest abschnittsweise angrenzt.

6. Zellenradschleuse (1) nach einem der Ansprüche 3 bis 5, **dadurch gekennzeichnet, dass** der zumindest eine Deckel (11A, 11B) den Hohlraum (21) zumindest abschnittsweise begrenzt.

7. Zellenradschleuse (1) nach einem der Ansprüche 3 bis 6, **dadurch gekennzeichnet, dass** der Hohlraum (21) zumindest einen Ringraum (23) bildet, der entlang zumindest eines Abschnitts der Antriebswelle (7) vollumfänglich an die Antriebswelle (7) angrenzt.

8. Zellenradschleuse (1) nach einem der Ansprüche 1 bis 7, **dadurch gekennzeichnet, dass** die Druckeinrichtung (20) oder die zweite Druckeinrichtung einen Förderdruck erzeugt, wobei eine Zelle (9) der Zellenradschleuse (1) mit dem Förderdruck beaufschlagbar ist, und wobei der Förderdruck das Herausfördern des Schüttguts aus der Zelleradschleuse (1) bewirkt.

9. Zellenradschleuse (1) nach Anspruch 8, **dadurch gekennzeichnet, dass** der Hohlraum-Überdruck und/oder der Dichtmittel-Überdruck dem Förderdruck entspricht oder nahezu entspricht, oder dass der Hohlraum-Überdruck und/oder der der Dichtmittel-Überdruck höher ist als der Förderdruck innerhalb des Zellenradraums (12).

10. Zellenradschleuse (1) nach einem der Ansprüche 1 bis 9, **gekennzeichnet durch** zumindest einen Kanal (24, 27), der an der Druckeinrichtung (20) oder an der zweiten Druckeinrichtung fluidisch angeschlossen ist, und mit dem der Hohlraum (21) und/oder die Dichtmittelnut (14) mit einem Überdruck beaufschlagbar ist.

11. Zellenradschleuse (1) nach einem der Ansprüche 1 bis 10, **dadurch gekennzeichnet, dass** der Hohlraum-Überdruck und/oder der Dichtmittel-Überdruck und/oder der Förderdruck steuerbar und/oder regelbar, insbesondere steuer- und regelbar, sind.

## Claims

1. A rotary feeder (1) for bulk goods, particularly for sprayed concrete, having
a rotor chamber (12),
a rotor (3) which is arranged in the rotor chamber (12) and which is connected to a drive shaft (7) in a rotationally fixed manner, and
at least one cover (11A, 11B) which delimits the rotor chamber (12), wherein sealing means (13) that are arranged between the cover (11A, 11B) and rotor (3) are provided for connecting the cover (11A, 11B) to the rotor chamber (3) in a sealed manner,
wherein a pressure device (20) is provided, using which the sealing means (13) and/or a sealing means chamber (14) comprising the sealing means (13) can be loaded with a sealing-means overpressure, wherein the sealing means (13) can be pressed more strongly onto at least one sealing-means contact surface (15) that is assigned to the sealing means (13) by means of the sealing-means overpressure, wherein the sealing means (13) is arranged in an annular sealing-means groove (14), and wherein the sealing-means groove (14) can be loaded with the sealing-means overpressure,
**characterized in that** the sealing-means groove (14) is arranged in the cover (11A, 11B) and on a sleeve (28) which is arranged in the rotor chamber (12), is in sealing contact with the rotor (3) and adjoins the cover (11A, 11B),
wherein the sealing-means contact surface (15) is located on the sleeve (28) and on the rotor (3), and
wherein the sealing means (13) comprises a main seal and two auxiliary seals, wherein the first auxiliary seal is arranged on the sleeve (28) and the second auxiliary seal is arranged in the sealing-means space (14) in the region of the cover (11B).

2. The rotary feeder (1) according to Claim 1, **characterized in that** the sealing means (13) comprises a pressure surface, onto which a force can be exerted by the sealing-means overpressure, which force amplifies a contact force of the sealing means (13).

3. The rotary feeder (1) according to Claim 1 or 2, **characterized in that** using the pressure device (20) or using a second pressure device, at least one cavity (21) which is arranged in or on the rotor (3) and is inaccessible for the bulk goods can be loaded with a cavity overpressure.

4. The rotary feeder (1) according to Claim 3, **characterized in that** the cavity (21) is formed as at least one recess that is arranged on the rotor (3).

5. The rotary feeder (1) according to Claim 3 or 4, wherein the rotor (3) comprises a shaft retainer (6) which is formed as a central opening (5) running in the longitudinal direction, in which shaft retainer the drive shaft (7) is arranged, **characterized in that** the cavity (21) adjoins the central opening (5) at least in sections.

6. The rotary feeder (1) according to at least one of Claims 3 to 5, **characterized in that** the at least one cover (11A, 11B) delimits the cavity (21) at least in sections.

7. The rotary feeder (1) according to any one of Claims 3 to 6, **characterized in that** the cavity (21) forms at least one annular space (23) which adjoins the drive shaft (7) fully along at least one section of the drive shaft (7).

8. The rotary feeder (1) according to any one of Claims 1 to 7, **characterized in that** the pressure device (20) or the second pressure device generates a delivery pressure, wherein a cell (9) of the rotary feeder (1) can be loaded with the delivery pressure, and wherein the delivery pressure conveys the bulk goods out of the rotary feeder (1).

9. The rotary feeder (1) according to Claim 8, **characterized in that** the cavity overpressure and/or the sealing-means overpressure corresponds or almost corresponds to the delivery pressure or **in that** the cavity overpressure and/or the sealing-means overpressure is higher than the delivery pressure inside the rotor chamber (12).

10. The rotary feeder (1) according to any one of Claims 1 to 9, **characterized by** at least one channel (24, 27) which is fluidically connected to the pressure device (20) or to the second pressure device and using which the cavity (21) and/or the sealing-means groove (14) can be loaded with an overpressure.

11. The rotary feeder (1) according to any one of Claims 1 to 10, **characterized in that** the cavity overpressure and/or the sealing-means overpressure and/or the delivery pressure are controllable in an open- and/or closed-loop manner, particularly controllable in an open- and closed-loop manner.

## Revendications

1. Vanne à roue cellulaire (1) pour des produits en vrac, notamment pour du béton projeté, dotée
d'un compartiment (12) à roue cellulaire,
d'une roue cellulaire (3), placée dans le compartiment (12) à roue cellulaire, qui est assemblée de manière solidaire en rotation avec un arbre d'entraînement (7) et
au moins un couvercle (11A, 11B), lequel délimite le compartiment (12) à roue cellulaire, des moyens d'étanchéité (13) placés entre le couvercle (11A, 11B) et la roue cellulaire (3) étant prévus pour assembler de manière étanche le couvercle (11A, 11B) avec le compartiment (3) à roue cellulaire,
un dispositif de pression (20) étant prévu, à l'aide duquel le moyen d'étanchéité (13) et / ou un compartiment (14) à moyen d'étanchéité entourant le moyen d'étanchéité (13) étant susceptible d'être sollicité par une surpression de moyen d'étanchéité, le moyen d'étanchéité (13) étant susceptible d'être pressé plus fort par la surpression de moyen d'étanchéité contre une surface de contact (15) de moyen d'étanchéité affectée au moyen d'étanchéité (13), le moyen d'étanchéité (13) étant placé dans une rainure (14) de moyen d'étanchéité et la rainure (14) de moyen d'étanchéité étant susceptibles d'être sollicitée avec la surpression de moyen d'étanchéité,
**caractérisée en ce que** la rainure (14) de moyen d'étanchéité est placée dans le couvercle (11A, 11B) et sur une douille (28) placée dans le compartiment (12) à roue cellulaire, se trouvant en contact assurant l'étanchéité avec la roue cellulaire (3) et adjacente au couvercle (11A, 11B),
la surface de contact (15) de moyen d'étanchéité se trouvant sur la douille (28) et sur la roue cellulaire (3) et
le moyen d'étanchéité (13) comprenant un joint principal et deux joints additionnels, le premier joint additionnel étant placé sur la douille {28) et le deuxième joint additionnel étant placé dans le compartiment (14) à moyen d'étanchéité, dans la zone du couvercle (11B).

2. Vanne à roue cellulaire (1) selon la revendication 1, **caractérisée en ce que** le moyen d'étanchéité (13) comprend une surface de pression, sur laquelle est susceptible d'être exercée par la surpression de moyen d'étanchéité une force, qui renforce une pression de contact du moyen d'étanchéité (13).

3. Vanne à roue cellulaire (1) selon la revendication 1 ou 2, **caractérisée en ce qu'**à l'aide du dispositif de pression (20) ou à l'aide d'un deuxième dispositif de pression, au moins une cavité (21) placée dans ou sur la roue cellulaire (3), inaccessible par le produit en vrac est susceptible d'être sollicitée par une surpression de cavité.

4. Vanne à roue cellulaire (1) selon la revendication 3, **caractérisée en ce que** la cavité (21) est constituée par au moins un évidement placé sur la roue cellulaire (3).

5. Vanne à roue cellulaire (1) selon la revendication 3 ou 4, la roue cellulaire (3) comprenant un logement d'arbre (6), constitué en tant qu'un orifice central (5) s'écoulant dans la direction longitudinale, dans lequel est placé l'arbre d'entraînement (7), **caractérisée en ce que** la cavité (21) est adjacente au moins par endroits à l'orifice central (5).

6. Vanne à roue cellulaire (1) selon l'une quelconque des revendications 3 à 5, **caractérisée en ce que** l'au moins un couvercle (11A, 11B) délimite la cavité (21) au moins par endroits.

7. Vanne à roue cellulaire (1) selon l'une quelconque des revendications 3 à 6, **caractérisée en ce que** la cavité (21) constitue au moins un espace annulaire (23), qui le long d'au moins une portion de l'arbre d'entraînement (7), est adjacent par toute sa circonférence à l'arbre d'entraînement (7).

8. Vanne à roue cellulaire (1) selon l'une quelconque des revendications 1 à 7, **caractérisée en ce que** le dispositif de pression (20) ou le deuxième dispositif de pression génère une pression de convoyage, une cellule (9) de la vanne à roue cellulaire (1) pouvant être sollicitée par la pression de convoyage et la pression de convoyage provoquant le convoyage du produit en vrac hors de la vanne à roue cellulaire (1).

9. Vanne à roue cellulaire (1) selon la revendication 8, **caractérisée en ce que** la surpression de cavité et / ou la surpression de moyen d'étanchéité correspond ou correspond quasiment à la pression de convoyage ou **en ce que** la surpression de cavité et / ou la surpression de moyen d'étanchéité est plus élevée que la pression de convoyage à l'intérieur du compartiment (12) à roue cellulaire.

10. Vanne à roue cellulaire (1) selon l'une quelconque des revendications 1 à 9, **caractérisée par** au moins un canal (24, 27), qui est raccordé fluidiquement sur le dispositif de pression (20) ou sur le deuxième dispositif de pression et à l'aide duquel la cavité (21) et / ou la rainure (14) de moyen d'étanchéité est susceptible d'être sollicitée par une surpression.

11. Vanne à roue cellulaire (1) selon l'une quelconque des revendications 1 à 10, **caractérisée en ce que** la surpression de cavité et / ou la surpression de moyen d'étanchéité et / ou la pression de convoyage sont susceptibles d'être commandées et / ou régulées, notamment commandées et régulées.
